# EUROPEAN PATENT APPLICATION

(11) **EP 2 386 589 A1**
(43) Date of publication of application: **16.11.2011**
(21) Application number: 10305435.9
(22) Date of filing: 23.04.2010
(51) Int. Cl.: C08G 73/00, C08L 79/00, C08G 18/00, A01N 25/00, A61K 33/38, C09D 5/14, C11D 17/00

(54) **Novel antimicrobial composition, use and preparation thereof**

(71) Applicant: Centre National de la Recherche Scientifique (C.N.R.S), 75016 Paris (FR); Université du Maine, 72017 Le Mans (FR)
(72) Inventor: Tabellout, Mohamed, 72550 Fay (FR); Rogalskiy, Sergiy, 02152 KYIV (UA); Bardeau, Jean-François, 72290 Courceboeufs (FR); Tarasyuk, Oksana, 02152 Kyiv (UA); Fatyeyeva, Kateryna, 76100 Rouen (FR)
(74) Representative: Blot, Philippe Robert Emile

(57) **Abstract**

The present invention relates to a composition comprising a polymer and a poly(polymethylene)guanidine (PpMG) salt of general formula (I): 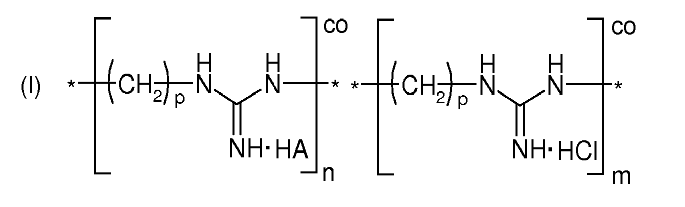 wherein:
- n is comprised from 10 to 140;
- m is comprised from 0 to 35;
- p is comprised from 2 to 12; and
- HA is a sulfonic acid.

## Description

The present invention relates to a polymer composition having antimicrobial activity. The present invention also concerns methods of preparation thereof as well as uses thereof as antimicrobial compositions.

The use of polymers in technique is constantly growing due to their unique properties like chemical and hydrocarbon resistance, impact strength, burst strength, abrasion and scratch resistance, flexibility, high service temperature, and long-term ageing. It allows the use of polymers for the production of fuel lines, oil and gas flexible pipes, tubing, hose fittings, protective powder coatings, reverse osmotic membranes, electrical cables, textiles and garments, institutional and home furnishings etc.

In most of such cases, polymeric surfaces exposed to humid and aqueous environments are readily colonized by harmful bacteria, mold, mildew and fungi which can cause odors, stains and lead to product deterioration.

The use of antimicrobial agents is thus required to prevent the growth of microorganisms on polymeric surfaces.

Following organic type biocides are most widely used to impart antimicrobial resistance to various polymeric fabrics or coating formulations: quaternary ammonium salts (US4282366, US5416210), diphenyl ether derivatives (WO/1999/031036, WO/2004/071537), guanidine derivatives (US4816163, US4906385, US20020177627, JP 04225945). Water soluble poly(hexamethylene) biguanide (PHMB) hydrochloride, as well as water resistant PHMB stearate have been reported as biocides having a broad spectrum of antimicrobial activity (US 6465412, EP0987946).

Meanwhile, the use of most organic biocides in polymer articles or protective coatings is limited by their migration and their increased solubility in water or in common organic solvents, as that may cause leaching of such additives at operational conditions, especially when coating is used in continuous contact with flowing water or oils. Therefore antimicrobial properties are commonly not so long-lasting. Another problem is insufficient thermal stability of many organic biocides, especially at processing temperature of polyamide (US 20050170001).

Poly(polymethylene)guanidine salts (PpMG), and particularly poly(hexamethylene)guanidine (PHMG) salts are known as biocides possessing a wide range of activity (M. K. Oulé et al. Poly(hexamethylene)guanidine hydrochloride-based disinfectant: a novel tool to fight meticillin-resistant Staphylococcus aureus and nosocomial infections, Journal of Medical Microbiology, vol. 57, 1523-1528 (2006)).

A series of both water soluble and water resistant PHMG salts have been obtained by simple, low-wasted methods (RU2039735C1, RU2052453C1). PHMG salts are claimed as imparting excellent antibacterial properties to various resins (EP1110948), fibers (JP2002235282), protective coatings and varnishes (RU2181737C2, RU 2190648, RU2236428C1). PHMG benzoate, p-toluenesulfonate (JP2002235282), stearate, isophtalate, oleate (RU2181737C2) have been described as highly effective water resistant antimicrobial agents.

The potential problem of the use of said PHMG salts in polymeric articles and protective coatings is the stability of such additives to high temperature conditions associated with the processing of polymers, particularly polyamides.

Thus, the aim of the present invention is to provide antimicrobial resistance to polymeric articles by the means of polymer composition stable to high temperature conditions.

To this end, the present invention relates to a composition comprising a polymer and a poly(polymethylene)guanidine (PpMG) salt of general formula (I): 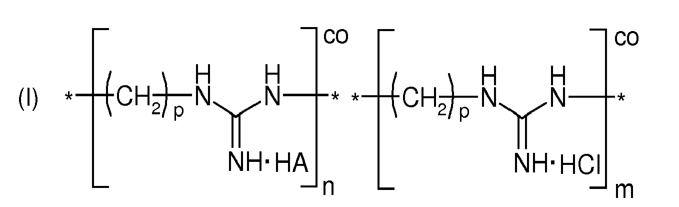 wherein:
- n is comprised from 10 to 140;
- m is comprised from 0 to 35;
- p is comprised from 2 to 12; and
- HA is a sulfonic acid.

If m = 0, PpMG salts are homopolymers, formed of n (polymethylene)guanidine sulfonate monomers.

Else, if m > 0, PpMG salts are statistic copolymers, formed of a statistic arrangement of n (polymethylene)guanidine sulfonate monomers and m (polymethylene)guanidine hydrochloride monomers.

In order to avoid confusion between block and statistic copolymer, specific notation 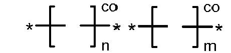 is employed, meaning copolymer (I) should be understood as of statistic type.

The dot notation (e.g. NH₃·HCl), often used for denoting salts, means the salt "NH₄⁺ Cl". As a result, "NH·HA" should be understood as "NH₂⁺ A⁻".

The term "sulfonic acid" refers to a class of organic acids bearing at least one 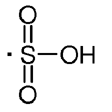 radical, preferably bound to a carbon atom.

In a particular embodiment, the polymer is selected from polyamide (PA) and polyvinylidene fluoride (PVDF).

Polyvinylidene fluoride is a highly non-reactive and pure thermoplastic fluoropolymer which melting point is relatively low compared to other fluoropolymers (between 170°C and 180°C).

The composition of the invention has following advantages over known antimicrobial compositions.

PpMG salts are thermally stable at the conditions of polyamide and polyvinylidene fluoride melt processing (230-290°C, corresponding to the range of temperature for melt extrusion of both polyamides and polyvinylidene fluoride), and also have good compatibility with these two polymers. Therefore, antimicrobial PA or PVDF compositions, including articles or protective coatings, can be obtained by common melt blending of the mixtures of commercial grade PA or PVDF and water resistant PpMG salts.

PpMG salts are water and oil resistant, so that they can provide long-term antimicrobial protection of polymeric articles due to their high resistance to the migration or extraction from polymeric articles.

In a particular embodiment, in above formula (I) p is 6.

Then, poly(p-methylene)guanidines (PpMG) are poly(hexamethylene)guanidines (PHMG).

In a particular embodiment, HA is selected from the sulfonic acids consisting of:
- sulfonic acids of formula RSO₃H, where
   R is selected from the group consisting of an alkyl group, a CH(COOR₃)CH₂COOR₃ group, a perchloroalkyl group, a perfluoroalkyl group, a pentachlorophenyl group or a pentafluorophenyl group; or
   R represents (CH₂)_{q}R₁, where
      q is comprised from 1 to 4, and
      R₁ is selected from the group consisting of a phenyl group, a NHR₂ group and a COOR₃ group where
         R₂ is selected from the group consisting of C₆H₄(COOR₄), C₆H₃(OH)(COOR₄), C₆H₄(OR₄), C₆H₄(R₄), SO₂C₆H₅, SO₂C₆H₄R₄, SO₂C₆H₄OR₄, C₆H₄SO₂NH₂, C₆H₄SO₂NHR₄ and COR₅, where
            R₃ and R₄ represent independently an alkyl group,
            R₅ represents an alkyl group or a phenyl group;
- sulfonic acids of formula (II), where 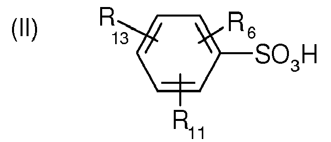
   R₆ is selected from the group consisting of H, halogen, alkyl group, N(R₇)₂ and NR₇R₈, where
      R₇ represents H or an alkyl group,
      R₈ represents a phenyl group or a COR₉ group, where
         R₉ is selected from the group consisting of an alkyl group, a phenyl group, a SO₂C₆H₄R₁₀ group and a SO₂C₆H₄OR₁₀ group, where
            R₁₀ represents H or an alkyl group,
   R₁₁ is selected from the group consisting of H, an halogen, an alkyl group, a OR₁₂ group, a NHR₁₂ group and a COOR₁₂ group, where
      R₁₂ represents H or an alkyl group,
   R₁₃ is selected from the group consisting of H, an halogen, alkyl, hydroxyl, alkoxy and phenyloxy group;
- sulfonic acids of formula (III) where 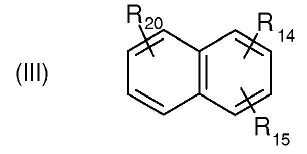
   R₁₄ represents H or SO₃H,
   R₁₅ represents a N(R₁₆)₂ group or a NR₁₆R₁₇ group, where
      R₁₆ represents H or an alkyl group,
      R₁₇ represents a COR₁₈ group, where
         R₁₈ is selected from the group consisting of an alkyl group, a phenyl group, a SO₂C₆H₄R₁₉ group and a SO₂C₆H₄OR₁₉ group where
            R₁₉ represents H or an alkyl group,
   R₂₀ represents H or a SO₃H,
   provided that at least one of R₁₄ and R₂₀ represents SO₃H.

The term "alkyl" refers to a saturated or unsaturated aliphatic hydrocarbon group, which may be straight or branched, comprising from 1 to 20 carbon atoms. "Branched" refers to an alkyl group having at least one lower alkyl group such as methyl, ethyl or propyl attached to a linear alkyl chain. "Lower alkyl" refers to an alkyl group comprising from 1 to 4 carbon atoms which may be straight or branched.

The term "alkoxy" refers to an -O-alkyl radical.

The term "halogen" refers to the atoms of the group 17 of the periodic table and includes in particular fluorine, chlorine, bromine, and iodine atom.

The term "phenyl" refers to a benzenic ring, optionally substituted by at least one group, in particular selected from halogen, hydroxyl, alkyl and alkoxy group.

In a particular embodiment, HA is selected from the sulfonic acids consisting of:
- sulfonic acids of formula RSO₃H, where
   R represents an alkyl group comprising from 12 to 20 carbon atoms;
   or R represents CH₂R₁, where
      R₁ represents a phenyl group or a NHR₂ group, where
         R₂ is selected from the group consisting of COR₃, C₆H₄(COOR₄), C₆H₃(OH)(COOR₄), SOP₂C₆H₄R₄ and C₆H₄SO₂NHR₄, where
            R₃ represents an alkyl group comprising from 12 to 17 carbon atoms, and
            R₄ represents an alkyl group comprising from 1 to 16 carbon atoms;
      or R represents (CH₂)_{q}COOR₅ or CH(COOR₅)CH₂COOR₅, where
      q is an integer comprised from 1 to 4, and
      R₅ represents an alkyl group comprising from 4 to 16 carbon atoms;
- sulfonic acids of formula (II'), where 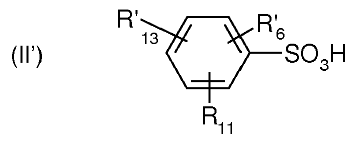
   R'₆ is selected from the group consisting of H, an alkyl group comprising from 1 to 16 carbon atoms, N(R'₇)₂ and NR'₇R'₈, where
      R'₇ represents H or an alkyl group comprising from 1 to 16 carbon atoms,
      R'₈ represents a phenyl or a COR'₉ group, where
         R'₉ is selected from the group consisting of an alkyl group comprising from 1 to 17 carbon atoms, a phenyl group and a SO₂C₆H₄R'₁₀ group, where
            R'₁₀ represents H or an alkyl group comprising from 1 to 16 carbon atoms,
   R'₁₁ is selected from the group consisting of H, an alkyl group comprising from 1 to 16 carbon atoms, a OR₁₂ group, a NHR'₁₂ group and a COOR'₁₂ group, where
      R'₁₂ represents H or an alkyl group comprising from 1 to 16 carbon atoms,
      R'₁₃ is selected from the group consisting of H, methyl group and phenyloxy group;
- sulfonic acids of formula (III') where 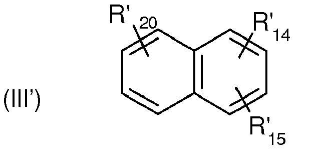
   R'₁₄ represents H or SO₃H,
   R'₁₅ represents a N(R'₁₆)₂ group or a NR'₁₆R'₁₇ group, where R'₁₆ represents H or an alkyl group comprising from 1 to 16 carbon atoms,
      R'₁₇ represents a COR'₁₈ group, where
         R'₁₈ is selected from the group consisting of an alkyl group comprising from 1 to 17 carbon atoms, a phenyl group and a SO₂C₆H₄R'₁₉ group, where
            R'₁₉ represents H or an alkyl group comprising from 1 to 16 carbon atoms,
   R'₂₀ represents H or a SO₃H,
   provided that at least one of R'₁₄ and R'₂₀ represents SO₃H.

Preferably, HA is selected from the sulfonic acids consisting of:
- sulfonic acids of formula R₂₁SO₃H, where R₂₁ represents an alkyl group;
- sulfonic acids of formula (IV), where 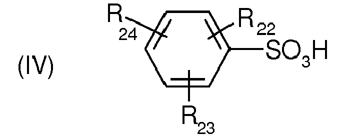 R₂₂, R₂₃ and R₂₄ are independently selected from the group consisting of H, NH₂, COOH and an alkyl group;
- sulfonic acids of formula (V), where 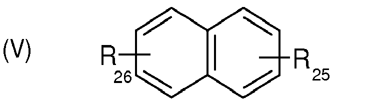
at least one of R₂₅ and R₂₆ represents SO₃H.

In a particularly preferred embodiment, HA is selected from dodecylbenzenesulfonic acid, naphthalene-2-sulfonic acid, naphthalene-1-sulfonic acid, p-toluenesulfonic acid, 2-carboxybenzenesulfonic acid and 4-aminobenzenesulfonic acid, preferably from dodecylbenzenesulfonic acid, naphthalene-2-sulfonic acid and p-toluenesulfonic acid.

In an advantageous embodiment, HA is selected from dodecylbenzenesulfonic acid and naphthalene-2-sulfonic acid, and the polymer comprises at least one polyamide, selected from PA-4,6, PA-6, PA-6,I,PA-6,T, PA-6/6,T, PA-6,6, PA-6,T/6,6, PA-6,T/6,I, PA-6,10, PA-6,12, PA-10,10, PA-12,10, PA-12,12, PA-10,T, PA-12,T, PA-11 and PA-12, preferably selected from PA-11 and PA-12.

In another advantageous embodiment, HA is selected from dodecylbenzenesulfonic acid and naphthalene-2-sulfonic acid, and the polymer comprises at least one polyamide, selected from PA-6, PA-6,6, PA-6,10, PA-6,12, PA-10,10, PA-11 and PA-12, preferably selected from PA-11 and PA-12.

The term "polyamide" refers to products resulting from the condensation:
- of one or more amino acids, such as aminocaproic, 7-aminoheptanoic, 11-amino undecanoic and 12-aminododecanoic acids, or of one or more lactams, such as caprolactam, oenantholactam and lauryllactam;
- of one or more salts or mixtures of diamines, such as hexamethylenediamine, dodecamethylenediamine, metaxylylenediamine, bis(p-aminocyclohexyl)methane and trimethylhexamethylenediamine with diacids such as isophthalic, terephthalic, adipic, azelaic, suberic, sebacic and dodecanedicarboxylic acids; or mixtures of several of these monomers, resulting on copolyamides. Advantageously, aliphatic polyamides are used.

The aliphatic polyamides may be chosen from PA-6, resulting from the ring-opening polymerization of caprolactam, PA-11 (also called *Rilsan*) and PA-12.

The aliphatic polyamides may also be chosen from aliphatic polyamides resulting from the condensation of an aliphatic diamine having from 6 to 12 carbon atoms and of an aliphatic diacid having from 6 to 12 carbon atoms:
PA-6,6 resulting from the condensation of hexamethylenediamine and 1,6-hexanedioic acid;
PA-6,10 resulting from the condensation of hexamethylenediamine and 1,10-decanedioic acid;
PA-6,12 resulting from the condensation of hexamethylenediamine and 1,12-dodecanedioic acid;
PA-10,10 resulting from the condensation of the C10 diamine and 1,10-decanedioic acid.

Advantageously, PA-11 and PA-12 are used.

According to a preferred embodiment, the composition of the present invention comprises a polymer comprising at least one polyamide, selected from PA-6, PA-6,6, PA-6,10, PA-6,12, PA-10,10, PA-11 and PA-12, preferably selected from PA-11 and PA-12, and a salt of formula (I) wherein p is 6 and HA is selected from dodecylbenzenesulfonic acid and naphthalene-2-sulfonic acid.

In another advantageous embodiment, the polymer of the composition of the invention is polyvinylidene fluoride (PVDF) and, in formula (I), HA is p-toluenesulfonic acid and p is 6.

According to a preferential aspect of the invention, the composition comprises from 75% to 99% by weight of polymer and from 1% to 5% by weight of PpMG salts, preferably from 1% to 2%.

Antimicrobial properties of the polymer composition are provided by addition of 1% to 5% by weight of PpMG salts, preferably of 1% to 2% by weight of PpMG salts.

Preferably, the composition of the invention also comprises a plasticizer, in particular selected from N-butylbenzenesulfonamide, N-ethylbenzenesulfonamide, N-propylbenzenesulfonamide, N-butyl-p-toluenesulfonamide, N-ethyl-o-toluenesulfonamide, N-ethyl-p-toluenesulfonamide, 4-dodecylbenzenesulfonamide, N-(2-hydroxyethyl) benzenesulfonamide, N-(3-hydroxypropyl)benzenesulfonamide, N-(2-hydroxypropyl) benzenesulfonamide, 2-ethylhexyl-4-hydroxybenzoate, octyl-4-hydroxybenzoate, dibutylphthalate, dioctylphthalate, di(2-ethylhexyl)phthalate, diisodecylphthalate, dibutyladipate, dioctyladipate, di(2-ethylhexyl)adipate, dibutylsebacate, dioctylsebacate, di(2-ethylhexyl)sebacate, tri(2-ethylhexyl)phosphate, and more preferably from N-butylbenzenesulfonamide, N-(2-hydroxyethyl)benzenesulfonamide, 2-ethylhexyl-4-hydroxybenzoate and N-(2-hydroxypropyl)benzenesulfonamide.

The term "plasticizer" (also called dispersants) refers to an additive that increases the plasticity or fluidity of the material to which it is added, it usually softens the final product thus increasing its flexibility, transparency, durability, and longevity.

Preferably, the composition comprises less than 20% by weight of the plasticizer.

A composition without plasticizer, i.e. only comprising a polymer and PpMG salts, is in the form of a powder.
Such powder composition is the result of the dry blending of a polymer powder (in particular PA or PVDF) and a powder of PpMG salts.

The present invention also relates to a method of preparation of a powder composition comprising from 75% to 99% by weight of polymer and from 1% to 5% by weight of PpMG salts, preferably from 1% to 2%, said method comprising the mechanical blending of the polymer and PpMG salts at room temperature.

In the context of the invention, the term "mechanical blending", as used herein, refers to a simple dry blending of the constituents. The blending is carried out at standard temperature and pressure. The blending time must be long enough for the blend to be homogeneous. The final powder has a particle size that may vary from 10 µm to 1000 µm.

The present invention also relates to a method of coating an article with a film of the above-mentioned powder composition, comprising the following steps:
(a) placing the powder composition in a fluidized bed;
(b) heating the article to be coated to a temperature of the surface of said article comprised from 260°C to 300°C; and
(c) dipping the heated article into the fluidized bed to form a film onto said article.

Preferably, during step (a), the powder composition is placed in a fluidized bed in a glass vessel with the help of air compressor.

Preferably, during step (b), the article is heated in an oven until the surface of the article reaches the appropriate temperature.

Preferably, the temperature of heating in step (b) is high enough so that the powder composition melts when on contact with the previously heated article. Consequently, the powder composition melts and forms a film onto the surface of the article. Preferably, PpMG salts comprised in the composition are stable at the above defined temperature.

Alternatively, the present invention relates to a method of coating an article with a film formed of a thin layer of a powder composition comprising from 75% to 99% by weight of polymer and from 1% to 5% by weight of PpMG salts, preferably from 1% to 2%, said method comprising a step of spraying the powder composition onto the previously heated article so that the powder melts when on contact with it.

A composition comprising a polymer, PpMG salts and a plasticizer is in the form of a plasticized polymeric composition.
Such plasticized polymeric composition is the result of the melt blending of a melt polymer (PA or PVDF) and PpMG salts.
In the context of the invention, the term "plasticized polymeric composition", as used herein, refers to a polymeric composition whose plasticity and flexibility have been increased by the addition of a plasticizer, which turns it into a gel composition. Such plasticizers are used for the obtaining of plasticized polymeric articles. It may also be designated as a "gel composition".

The present invention also relates to a method of preparation of a plasticized polymeric composition, comprising from 75% to 99% by weight of polymer, from 1% to 5% by weight of PpMG salts, preferably from 1% to 2%, and less than 20% by weight of the above-defined plasticizer, said method comprising the melt blending of the polymer, the plasticizer and the PpMG salts at a temperature comprised from 220°C to 280°C, preferably from 240 °C to 260 °C.

The term "melt blending", as used herein, refers to the blending of the constituents in the melt state. The melt blending is carried out at a temperature high enough to melt the different constituents of the composition, but at which PpMG salts are still stable and do not degrade.

The present invention also relates to a method of preparation of the above-mentioned plasticized polymeric composition, comprising the previous dissolution of the PpMG salts into a plasticizer (to obtain a 10-30% wt. mixture of salts in the plasticizer) at a temperature comprised from 50°C to 60°C, followed by the melt blending of the polymer and the mixture of the dissolved PpMG salts in the plasticizer at a temperature comprised from 220 °C to 280 °C, preferably from 240 °C to 260 °C.

It has been found that most of the PpMG salts are highly soluble in plasticizers and, therefore, the total amount of salts can be previously dissolved in the plasticizers followed by addition to polymers such as polymer resins.

The present invention also relates to a method of coating an article with a film formed of a plasticized polymeric composition, comprising from 75% to 99% by weight of polymer, from 1% to 5% by weight of PpMG salts, preferably from 1% to 2%, and less than 20% by weight of the above-defined plasticizer, said method comprising the following steps :
(a) application of the plasticized polymeric composition at a temperature comprised from 240°C to 280°C, preferably from 260°C to 280°C, onto said article in order to form a film ; and
(b) drying said film.

Preferably, PpMG salts comprised in the composition are stable at the above-defined temperature.

The present invention also relates to an antimicrobial composition comprising the polymer composition as defined above.

The present invention also relates to an antimicrobial coating comprising the polymer composition as defined above.

The term "antimicrobial" refers to a substance that kills or inhibits the growth of microorganisms such as bacteria, fungi, yeasts, mold, mildew or protozoans. Antimicrobial compounds (also called "biocides") either kill microbes (microbiocidal) or prevent the growth of microbes (microbiostatic).

There are thousands of species of bacteria, approximately 200 of which are pathogenic for humans. A distinction is made between Gram+ bacteria such as *Staphylococcus aureus* and Gram- bacteria such as *Escherichia coli, Pseudomonas aeruginosa* and *Legionella* sp.

The incorporation of organic biocides into coating compositions makes it possible to obtain surfaces that are effective against Gram+ and Gram- type bacteria, mold, mildew, yeasts and fungi (e.g. *Candida albicans, T. Mentagrophytes, Escherichia coli, Bacillus coli, Aspergillus niger, Staphylococcus aureus*).

The present invention also relates to a coated article, obtainable by the coating method as defined above.

### EXEMPLES

### Example 1: Synthesis of PHMG dodecylbenzenesulfonate (PHMG-DBS)

PHMG-DBS (5) was prepared according to the following schemes:

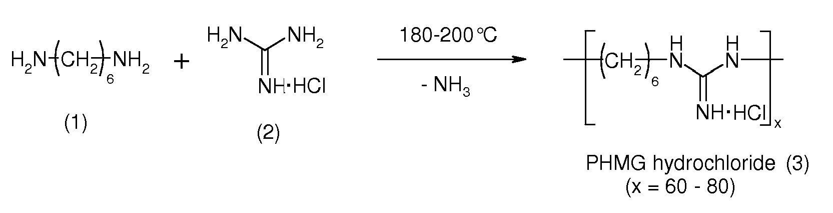

Guanidine hydrochloride, hexamethylenediamine, sodium dodecylbenzenesulfonate were supplied from *Aldrich.*

40.0 g (0.41 mol) of guanidine hydrochloride (2) and 45.8 g (0.39 mol) of hexamethylenediamine (1) were placed into a round-bottomed flask equipped with inside thermometer and arm stirrer. The reaction mixture was stirred and heated for 4 hours at 140°C, followed by 10 hours at 180°C, as long as ammonia formation took place. Residual ammonia was removed from the final product by vacuum distillation at 180°C. Hot melt of PHMG hydrochloride (3) was placed in a porcelain mortar and formed a vitreous solid when cooled.

Intrinsic viscosity value of 0.07 dl/g was obtained for PHMG hydrochloride solution in 0.1 M NaCl at 25°C.

Elemental analysis: (C₇H₁₆N₃Cl)ₓ (177.5)ₓ: Calculated: C 47.4, H 9.1, N 23.8, Cl 19.8; Found: C 47.3; H 9.0; N 23.6; Cl 20.0.

IR cm⁻¹ (KBr): 3240 (-C=N-H, v), 2920, 2860 (-CH₂, v), 1650 (-C=N, v), 1470 (-CH₂, d).

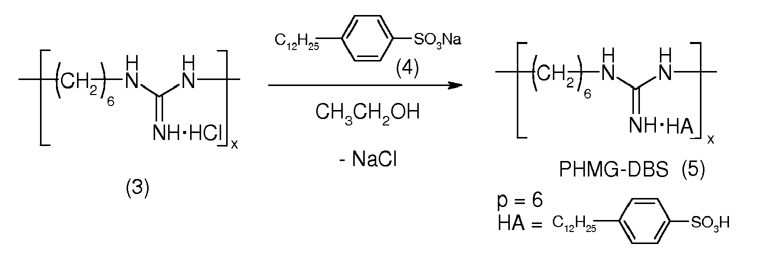

PHMG hydrochloride (3) (15.0 g, 0.084 mol) was dissolved into 120 ml of ethanol. Sodium dodecylbenzenesulfonate (4) (29.6 g, 0.085 mol) was added to the solution and it was stirred for 4 hours at 50-60°C. The precipitate of sodium chloride was filtered off and the filtrate was poured into water. White dough formed, which was separated by decantation and washed with water. This product was dried at 120°C. After cooling, the resulting fragile solid was finally pounded.

The obtained PHMG-DBS polymer (5) has a melting temperature region of 115-120°C. It is soluble in low alcohols but insoluble in hydrocarbon solvents and most common organic solvents.

Elemental analysis: (C₂₅H₄₅N₃O₃S)ₓ (467)ₓ: Calculated: C 64.2; H 9.6; N 9.0; S 6.8; Found: C 64.7, 64.4; H 9.5, 9.8; N 9.4, 9.2; S 6.9, 6.6.

Raman analysis: broad bands between 3130-3500 cm⁻¹ attributed to OH and NH₂ stretch vibrations. The aromatic C-H stretching Raman band appears clearly at 3069 cm⁻¹; whereas, the C-H symmetric stretches of aliphatic appear at 2864, 2911 and 2930 cm⁻¹, respectively. Broad bands between 1530 and 1650 cm⁻¹ corresponding mainly to CC in plane stretching mode of the aromatic moieties and to NH scissoring vibrations. Bands between 1350 and 1480 cm⁻¹ are assigned to bending vibrations of CH₂ and CH₃ groups of the alkyl chains. The bands observed between 800 and 1200 cm⁻¹ are related to ring vibration and indicative of CNC stretching modes.

According to thermogravimetric analysis data, PHMG-DBS is thermally stable to at least 350°C.

### Example 2: Synthesis of PHMG dodecylbenzenesulfonate-co-chloride (PHMG-DBS-CI)

PHMG-DBS-Cl (6) was prepared according to the following scheme:

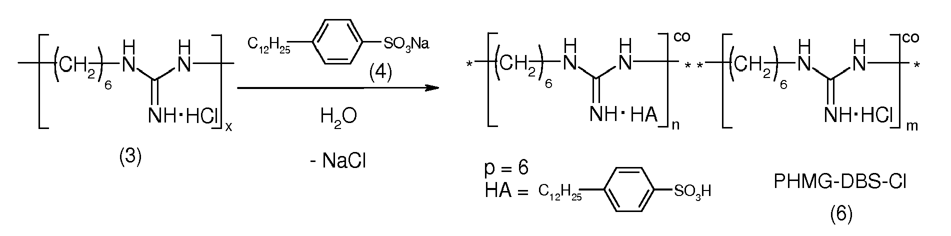

PHMG hydrochloride (3) (15.0 g, 0.084 mol) was dissolved into 70 ml of water. A solution of sodium dodecylbenzenesulfonate (4) (30.0 g, 0.086 mol) in 200 ml of water was added while stirring. White dough formed, which was separated by decantation, washed with water and separated again by decantation. This product was dried at 110°C. After cooling, the resulting fragile solid was finally pounded.

The obtained PHMG-DBS-Cl polymer (6) has a melting temperature region of 125-130°C. Elemental analysis: (C_{26.75}H₄₉N_{3.75}O₃SCI_{0.25})ₓ (476.5)ₓ: Found: C 67.3; H 10.3; N 11.0; S 6.7; Cl 1.8.

Thus, on the basis of elemental analysis, the ratio (S:Cl) is around (4:1), and prepared PHMG-DBS-Cl salt can be described by following formula:

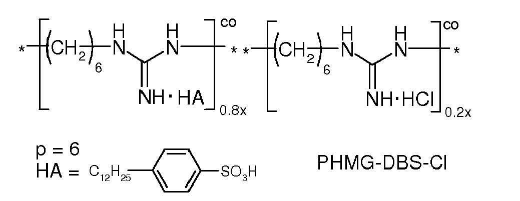

According to thermogravimetric analysis data, the thermal decomposition point of PHMG-DBS-Cl is 290°C.

### Example 3: Synthesis of PHMG naphthalene-2-sulfonate (PHMG-NS)

PHMG-NS (8) was prepared according to the following scheme:

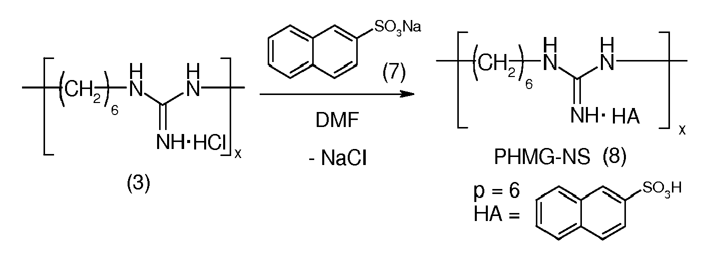

PHMG hydrochloride (3) (25.0 g, 0.14 mol) and sodium salt of naphthalene-2-sulfonic acid (7) (32.5 g, 0.14 mol) were dissolved into 150 ml of N,N-dimethylformamide. The precipitate of sodium chloride (7.8 g, 0.134 mol) was filtered off. The filtrate was poured into 400 ml of water and a solid precipitated. The product was filtered, washed with water and dried in vacuum at 90°C. The salt can be easily pounded to obtain a fine white powder.

The obtained PHMG-NS polymer (8) has a melting temperature region of 120-134°C. Elemental analysis: (C₁₇H₂₃N₃O₃S)ₓ (349)ₓ: Calculated: C 58.4; H 6.6; N 12.0; S 9.2; Found: C 58.1, 58.3; H 6.5, 6.8; N 11.7, 12.2; S 9.1, 9.5.

According to thermogravimetric analysis data, the thermal decomposition point of PHMG-NS is 340 °C.

### Example 4. Synthesis of PHMG toluenesulfonate (PHMG-TS)

PHMG-TS (11) was prepared according to the following schemes:

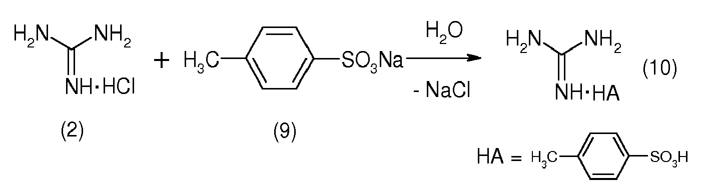

Guanidine hydrochloride (2) (20.0 g, 0.21 mol) and p-toluenesulfonic acid sodium salt (9) (40.7 g, 0.21 mol) were dissolved into water (200 ml) and the solution was cooled to 0-5°C. The white precipitate of guanidine toluenesulfonate (10) was filtered off and dried at 120°C.

Yield: 44 g (91%). Melting point: 120°C.

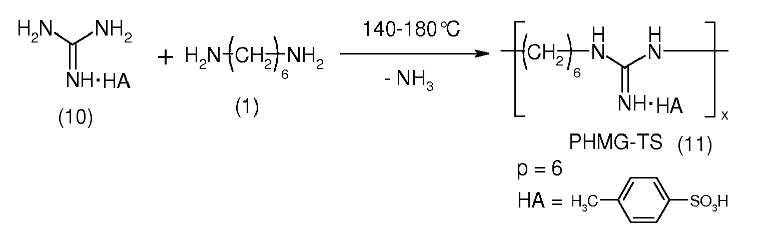

A mixture of guanidine toluenesulfonate (10) (30.0 g, 0.13 mol) and hexamethylenediamine (1) (14.3 g, 0.12 mol) was stirred and heated for 4 hours at 130-140°C, followed by 8 hours at 170-180°C under atmospheric pressure and 2 hours at reduced pressure (10 mm Hg). A vitreous transparent solid was obtained when reactionary melt cooled. The mixture was dissolved in ethanol (200 ml) at 50-60°C and then poured into water (300 ml). White dough formed, which was separated by decantation and washed few times with water. This product was dried at 120°C. After cooling, the resulting fragile solid was finally pounded.

The obtained PHMG-TS polymer (11) has a melting temperature region of 112-115°C. The melt viscosity determined with the help of Brookfield DV-III Ultra Rheometer (200°C, shear rate 1 s⁻¹) was found to be 15 000 cP.

The product is soluble in low alcohols but insoluble in hydrocarbon solvents and most common organic solvents.

Elemental analysis: (C₁₄H₂₃N₃O₃S)ₓ (313)ₓ: Calculated: C 53.6; H 7.3; N 13.4; S 10.2; Found: C 53.2, 53.5; H 7.5, 7.2; N 13.7, 13.5; S 10.4, 10.2.

According to thermogravimetric analysis data, the thermal decomposition point of PHMG-TS is 310°C.

### Example 5: Preparation of PA-PHMG compositions

Three different transparent films of polyamide PA-11-PHMG-DBS-Cl (45x45 mm, thickness 5 µm) were obtained by compression molding at 240°C of the mixture comprising 99% (98.5% and 98% respectively) by weight of Rilsan 11 powder (Arkema) and 1% (1.5% and 2% respectively) by weight of PHMG-DBS-Cl powder.

Three different films of polyamide PA-12-PHMG-DBS were obtained by compression molding at 240°C of the mixture comprising 99% (98.5% and 98% respectively) by weight of polyamide PA-12 powder UBESTA P3014U (UBE Industries) and 1% (1.5% and 2% respectively) by weight of PHMG-DBS powder.

Thermal analysis data indicate that when PHMG-DBS is introduced (2% by weight) the thermal stability of PA-12 is improved by at least 20°C. Thus, virgin PA-12 begins to decompose at 380°C, while the thermal decomposition point of PA-12-PHMG-DBS was detected at 400 °C.

### Example 6: Antimicrobial properties of PA-PHMG films

Fungal strains *Trichophyton mentagrophytes* and *Candida albicans* were cultivated for antimicrobial testing of composite films. Water suspensions of bacterial cultures were prepared in a concentration of 2.10⁹ CFU/ml. Liquid Saburo's agar was prepared in Petri dishes. Polyamide films containing antimicrobial PHMG salts were placed into the medium inoculated with fungal spore suspension when agar hardened.

Polymeric films surfaces were covered by equal volumes of microbe suspensions (0.3 ml) followed by placement into thermostatically controlled (30°C) chamber during 72 hours. Then the samples were taken out from the chamber and kept in dark box at room temperature. Results control was carried out for 30 days.

**Table 1 - Microbiological investigations of PA-PHMG-DBS films**

| | | microbe | |
|---|---|---|---|
| Film composition | %PHMG salts (wt.) | *C. albicans* | *T. mentagrophytes* |
| PA-11 | / | + | + |
| PA-12 | / | + | + |
| | 1% | + | + |
| PA-11-PHMG-DBS-Cl | 1.5% | + | + |
| | 2% | - | - |
| | 1% | + | + |
| PA-12-PHMG-DBS | 1.5% | + | + |
| | 2% | - | - |

| | | | |
|---|---|---|---|
| + (continuous fungal growth) - (no fungal growth) | | | |

On one hand, continuous fungal growth was observed on PA-11 and PA-12 control films and on films containing 1% or 1.5% by weight of both PHMG-DBS and PHMG-DBS-Cl. On the other hand, there was no bacterial growth on the surfaces of PA films containing 2% by weight of the said biocides.

In all cases intensive growth of bacterial colonies was observed in agar medium outside films surfaces. Thus, PHMG salts used can be characterized as biocides of contact action. Similar results were obtained on E. *Coli* bacteria. There was no bacterial growth on the surfaces of PA-12-PHMG-DBS films containing 1.5% by weight of PHMG-DBS.

### Example 7: Antimicrobial properties of PVDF-PHMG films

Three transparent films of poly(vinylidene)fluoride (PVDF) Kynar 1000 (Arkema, France), comprising PHMG-TS as antimicrobial additive were obtained by compression molding at 220°C of the mixture comprising 99% (98.5% and 98% respectively) by weight of Kynar 1000 powder and 1% (1.5% and 2% respectively) by weight of PHMG-TS powder. Microbiological investigations were performed using the method described in Example 6 (*Trichophyton mentagrophytes, Candida albicans* and *E. Coli*).

Continuous fungal growth was observed on the PVDF control films, while there was no bacterial growth on the surfaces of PVDF films containing 1% by weight of PHMG-TS.

## Claims

1. A composition comprising a polymer and a poly(polymethylene)guanidine (PpMG) salt of general formula (I): 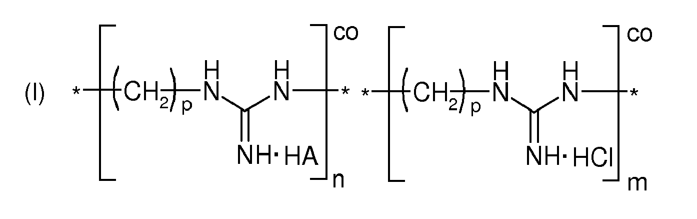 wherein:
- n is comprised from 10 to 140;
- m is comprised from 0 to 35;
- p is comprised from 2 to 12; and
- HA is a sulfonic acid.

2. The composition according to claim 1, wherein HA is selected from the sulfonic acids consisting of:
- sulfonic acids of formula RSO₃H, where
R is selected from the group consisting of an alkyl group, a CH(COOR₃)CH₂COOR₃ group, a perchloroalkyl group, a perfluoroalkyl group, a pentachlorophenyl group or a pentafluorophenyl group; or
R represents (CH₂)_{q}R₁, where
q is comprised from 1 to 4, and
R₁ is selected from the group consisting of a phenyl group, a NHR₂ group and a COOR₃ group where
R₂ is selected from the group consisting of C₆H₄(COOR₄), C₆H₃(OH)(COOR₄), C₆H₄(OR₄), C₆H₄(R₄), SO₂C₆H₅, SO₂C₆H₄R₄, SO₂C₆H₄OR₄, C₆H₄SO₂NH₂, C₆H₄SO₂NHR₄ and COR₅, where
R₃ and R₄ represent independently an alkyl group;
R₅ represents an alkyl group or a phenyl group;
- sulfonic acids of formula (II), where 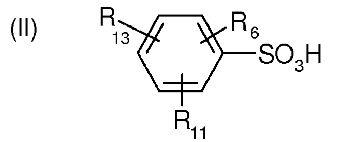
R₆ is selected from the group consisting of H, an halogen, an alkyl group, N(R₇)₂ and NR₇R₈, where
R₇ represents H or an alkyl group,
R₈ represents a phenyl group or a COR₉ group, where
R₉ is selected from the group consisting of an alkyl group, a phenyl group, a SO₂C₆H₄R₁₀ group and a SO₂C₆H₄OR₁₀ group, where
R₁₀ represents H or an alkyl group,
R₁₁ is selected from the group consisting of H, an halogen, an alkyl group, a OR₁₂ group, a NHR₁₂ group and a COOR₁₂ group, where
R₁₂ represents H or an alkyl group,
R₁₃ is selected from the group consisting of H, an halogen, alkyl, hydroxyl, alkoxy and phenyloxy group; and
- sulfonic acids of formula (III) where 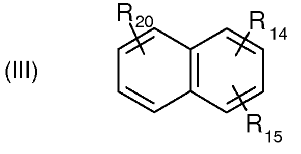
R₁₄ represents H or SO₃H,
R₁₅ represents a N(R₁₆)₂ group or a NR₁₆R₁₇ group, where
R₁₆ represents H or an alkyl group,
R₁₇ represents a COR₁₈ group, where
R₁₈ is selected from the group consisting of an alkyl group, a phenyl group, a SO₂C₆H₄R₁₉ group and a SO₂C₆H₄OR₁₉ group where
R₁₉ represents H or an alkyl group,
R₂₀ represents H or a SO₃H,
provided that at least one of R₁₄ and R₂₀ represents SO₃H.

3. The composition according to any one of claims 1 or 2, wherein p is 6, HA is selected from dodecylbenzenesulfonic acid and naphthalene-2-sulfonic acid, and the polymer comprises at least one polyamide, selected from PA-6, PA-6,6, PA-6,10, PA-6,12, PA-10,10, PA-11 and PA-12, preferably selected from PA-11 and PA-12.

4. The composition according to any one of claims 1 or 2, wherein p is 6, HA is p-toluenesulfonic acid and the polymer is polyvinylidene fluoride (PVDF).

5. The composition according to any one of claims 1 to 4, comprising from 75% to 99% by weight of polymer and from 1% to 5% by weight of PpMG salts, preferably from 1% to 2%.

6. The composition according to claim 5, which also comprises a plasticizer.

7. The composition according to claim 6, which comprises less than 20% by weight of the plasticizer.

8. A method of preparation of a composition according to any one of claims 1 to 5, as a powder, comprising the mechanical blending of the polymer and PpMG salts at room temperature.

9. A method of preparation of the composition according to claim 6 or 7, as a plasticized polymeric composition, comprising the melt blending of the polymer, the plasticizer and PpMG salts at a temperature comprised from 220°C to 280°C, preferably from 240°C to 260°C.

10. A method of coating an article with a film of a composition according to any one of claims 1 to 5, as a powder, comprising the following steps :
(a) placing the powder composition in a fluidized bed;
(b) heating the article to be coated to a temperature of the surface of said article comprised from 260°C to 300°C; and
(c) dipping the heated article into the fluidized bed to form a film onto said article.
